(19) Europäisches Patentamt
European Patent Office
Office européen des brevets

(11) **EP 4 442 353 A1**

(12) **EUROPEAN PATENT APPLICATION**

(43) Date of publication:
**09.10.2024 Bulletin 2024/41**

(21) Application number: **23386025.3**

(22) Date of filing: **03.04.2023**

(51) International Patent Classification (IPC):
**B01D 61/14** (2006.01)     **B01D 67/00** (2006.01)
**B01D 69/02** (2006.01)     **B01D 71/28** (2006.01)
**C08J 9/00** (2006.01)

(52) Cooperative Patent Classification (CPC):
**B01D 61/145; B01D 67/0027; B01D 69/02;
B01D 71/281; C08J 5/18;** B01D 2325/02;
B01D 2325/02832; B01D 2325/02833

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Max-Planck-Gesellschaft zur
Förderung der
Wissenschaften E.V.
80539 München (DE)**

(72) Inventors:
• **Kremer, Kurt
55218 Ingelheim (DE)**
• **Hsu, Hsiao-Ping
55126 Mainz (DE)**
• **Singh, Manjesh
208016 Kanpur (IN)**
• **Fytas, Georg
70013 Heraklion (GR)**

(74) Representative: **Deblon, Jörg-Stephan
Patentanwaltskanzlei Dr. Deblon
Alte Honrather Strasse 22
53797 Lohmar (DE)**

(54) **NANOPOROUS POLYMER MATERIALS AND PROCESS FOR THEIR PREPARATION**

(57)     The present invention relates to novel nanoporous polymer materials as well as to a facile, straight forward process for their preparation by fast mechanical deformation of highly entangled polymer articles above the glass transition temperature and subsequent quenching well below the glass transition temperature. The invention further encompasses the use of such nanoporous polymer materials in a broad variety of applications.

## Description

### Field of the Invention

The present invention relates to novel nanoporous polymer materials as well as to a facile, straight forward process for their preparation by fast mechanical deformation of highly entangled polymer articles above the glass transition temperature and subsequent quenching well below the glass transition temperature. The invention further encompasses the use of such nanoporous polymer materials in a broad variety of applications.

### Background

Nano- and microporous materials have attracted significant interest over the past decades as an important class of functional systems, which serve many purposes including but not limited to modern filtration processes such as advanced water treatment, gas separation, food processing or medical dialysis where well defined barrier properties with good control of their nano- or microporous structure are required to fulfil the desired purpose. Besides said filtration and separation applications, specific large absorption areas or microscopically small reaction volumes offer unique new scientific and technological possibilities due to extremely high surface to volume ratios optionally combined with catalytic activity in such materials.

Several reviews on nanoporous materials summarize the above mentioned requirements in detail as well as application aspects and prospective developments, see [1] Abetz, V., Kremer, K., Mueller, M., Reiter, G.: Functional macromolecular systems: Kinetic pathways to obtain tailored structures. Macromol. Chem. Phys. 220 (2019) 8, [2] Ariga, K., Nishikawa, M., Mori, T., Takeya, J., Shrestha, L.K., Hill, J.P.: Self-assembly as a key player for materials nanoarchitectonics. Science and Technology of Advanced Materials 20, 51-95 (2019) and [3] Bates, F.S., Fredrickson, G.H.: Block copolymers-designer soft materials. Phys. Today 52, 32-38 (1999).

A widely employed approach to create such porous materials uses blockcopolymers, where ordering into columnar or double gyroid structures and subsequent removal of one kind of block or of solvent leads to well defined pore structures, see [1], [2], [4] Sankhala, K., Koll, J., Abetz, V.: Facilitated structure formation in isoporous block copolymer membranes upon controlled evaporation by gas flow. Membranes 10, 83 (2020), [5] Bang, J., Kim, S.H., Drockenmuller, E., Misner, M.J., Russell, T.P., Hawker, C.J.: Defect-free nanoporous thin films from abc triblock copolymers. J. Am. Chem. Soc. 128, 7622-7629 (2006), [6] Hillmyer, M.A.: Nanoporous materials from block copolymer precursors. In: Abetz, V. (ed.) Block Copolymers II. Advances in Polymer Science, Vol 190., pp. 137-181. Springer and [7] Bolton, J., Bailey, T.S., Rzayev, J.: Large Pore Size Nanoporous Materials from the Self-Assembly of Asymmetric Bottlebrush Block Copolymers. Nano. Lett., 998-1001 (2011).

Larger pores are obtainable by using bottle brush polymers, see [8] Batys, P., Fedorov, D., Mohammadi, P., Lemetti, L., Linder, M.B., Sammalkorpi, M.: Self-assembly of silk-like protein into nanoscale bicontinuous networks under phase-separation conditions. Biomacromolecules 22, 690-700 (2021).

However, all of the aforementioned processes the polymer films typically require mechanical support by a substrate.

In [9] Liu, J., Huang, R., Li, G., Kaplan, D.L., Zheng, Z., Wang, X.: Generation of nano-pores in silk fibroin films using silk nanoparticles for full-thickness wound healing. Biomacromolecules 22(2), 546-556 (2021), [10] Escal'e, P., Rubatat, L., Billon, L., Save, M.: Recent advances in honeycomb-structured porous polymer films prepared via breath figures. Springer Nature 2021 LATEX template 20 Nanoporous free standing polymer films Eur. Polym. J. 48(6), 1001-1025 (2012) and [11] Meng, F., Doi, M., Ouyang, Z.: Cavitation in drying droplets of soft matter solutions. Phys. Rev. Lett. 113 (2014) porous materials are created by polymer solvent phase separation induced by fast evaporation of water or solvent nano droplets in vacuo.

The aforementioned procedures require tailored specialty polymers and highly controlled processing in order to obtain the desired structure which currently prevents them from being applied on larger commercial scale.

In another less sophisticated approach swelling of polymer gels or adding nanoscopic inclusions and subsequent fixation of the swollen network structure has been used to create microporous polymer systems, see [12] DeBenedictis, E.P., Zhang, Y., Keten, S.: Structure and mechanics of bundled semiflexible polymer networks. Macromolecules 53, 6123-6134 (2020) and [13] Gu, Y., Zhao, J., Johnson, J.A.: Polymer networks: From plastics and gels to porous frameworks. Angew. Chem. Int. Ed. 59, 5022-5049 (2020).

For such gels both chemical connectivity as well as entanglements, i.e. non-crossability of the chains determine structure and stability.

In US 2013/0157035 A1 a method of forming a porous polyethylene film is presented which includes several stretching and shrinking steps at. a given temperature regime.

WO2016/085709 A1 discloses a process for the preparation of porous polyolefins by biaxially stretching polyolefin films comprising a nanoinclusion additive being non compatible with the polymer matrix.

In US2022/0362720 A1 porous membranes of cycloic polyolefin polymers are produced from a polymer film comprising tetrahydrofurane by adding isopropanol as a non-solvent which induces phase separation.

US2022/0362984 A1 discloses the preparation of porous polymer filmes by stretching polymer films comprising a cavitating agent such as calcium carbonate orpolymer particles that are not miscible with the base polymer of the film.

Despite the progress made so far via the different approaches as described above, there is still a need to provide an easy to perform and direct route to free standing and stable nanoporous films in particular from readily available commodity polymers.

**Summary of the Invention**

According to one aspect of the invention, there is now provided a process for the preparation of nanoporous polymer materials comprising at least the steps of

1) stretching a polymer article in at least one direction at a temperature of at least 5 K, preferably at least 10 K above the glass transition temperature $T_g$ to form nanopores and thereafter

2) cooling the stretched polymer article to a temperature of 10 K below the glass transition temperature $T_g$ or less

whereby steps 1) and 2) together are performed within a period of time short enough to at least partially preserve the nanopores formed in step 1).

Another aspect the invention relates to porous polymer materials obtainable according to above mentioned process.

The invention further encompasses the use of the nanoporous polymer materials according to the invention for example as membranes such as for filtration or separation tasks, as or as part of protective coatings, optical coatings and as catalyst supports.

**Brief description of the drawings**

Figure 1 shows the polymer weight distribution of polystyrene employed in examples 1 to 4 to prepare the nanoporous polymer materials, here the nanoporous polymer film.

Figure 2 shows a sequence illustrating the preparation of the inventive nanoporous polymer films according to examples 2 to 4.

Figure 3 shows a picture of the center portion of the hat like structure obtained in example 4 and used for further analysis.

Figures 4 to 7 show SEM images of the fracture surface of the nanoporous biaxially expanded polystyrene film according to example 4. In detail, figures 4 and 5 show the fracture surface of the film in top view at low magnification, figure 5 and 6 a zoom-in of the same area.

Figure 8 shows how SFM experiments were performed. The nanoporous polymer film was left in the holder of the microtome and the film protruded by approx. 100 $\mu$m from the holder surface. Polymer surfaces have been cut by a diamond microtome.

Figures 9 and 10 show a high SFM topography image of the nanoporous polystyrene film obtained according to example 4. A granular structure with feature diameters down to 10 nm can be observed.

Figure 11 shows the longitudinal ($C_L$) and transversal ($C_T$) sound velocities as measured by BLS in dependence of porosity and effective density of the polymer article, i.e. the pristine polymer film according to example 1 and the nanoporous polymer films according to examples 2 to 4.

Figure 12 shows the longitudinal sound velocity ($C_L$) of the polymer article, i.e. the pristine polymer film according to example 1 and the nanoporous polymer films according to examples 2 to 4 at various temperatures as measured by BLS. The grey rectangle indicates the region of the glass transition temperature $T_g$.

Figure 13 shows the porosity of the polymer articles, i.e. the pristine polymer film according to example 1 and the nanoporous polymer films according to examples 2 to 4 at various temperatures as measured by BLS. The grey rectangle indicates the region of the glass transition temperature $T_g$.

Figure 14 shows the frame and effective Young ($E_{PS}$ and $E_{eff}$) and Bulk Moduli ($K_{PS}$ and $K_{eff}$) depending on porosity of the polymer films according to examples 1 to 4.

Figure 15 shows the frame and effective Shear Modulus ($G_{PS}$ and $G_{eff}$) as well as the Poisson ratio depending on porosity of the polymer films according to examples 1 to 4.

Figure 16 shows the cumulative pore volume in dependence of the pore size as taken from BET Experiments for example 4.

Figure 17 shows the experimental setup used for BLS experiments.

Figure 18 shows the polarized BLS spectrum of the nanoporous polymer film according to example 4 recorded using the scattering geometry of Figure 19.

Figure 19 shows the schematic of transmission geometry used in BLS experiments. The phonon wavevector $q_\parallel$ = ks - ki, ks and ki being wave vectors of the scattered and the incident light in the (nanoporous) polymer film directs in the film plane when the scattering angle $\theta$ is half of the incident angle $\alpha$. Besides the inelastic scattering at $q_\parallel$, the wavevector qBS from the backscattered incident beam with ki can be also selected.

Figure 20 shows a master curve with the storage modulus G' shown as line of stars and the loss modulus G" shown as line of circles and the first crossing point $1/\tau_d$ as the reciprocal for the reptation disentanglement time for polystyrene with Mn = 200 kDa and a reference temperature of 433 K which was used to calculate a suitable time range for step 1 for polystyrene Mn = 1037 kDa employed in examples 1 to 4. Area A designates the polymer flow, B the rubbery state, C segmental flow and D the glassy state.

**Detailed description of the Invention**

The invention also encompasses all combinations of all levels of preferential embodiments or parameter ranges as disclosed hereinafter either with each other or with the broadest disclosed parameter range or embodiment.
Whenever used herein the terms "including", "for example", "e.g.", "such as" and "like" are meant in the sense of "including but without being limited to" or "for example without limitation", respectively.

The Polymer Article

As used herein the term polymer article denotes any polymer article that can be stretched in at least one dimension. This inter alia includes polymer films and hollow polymer articles as used in blow molding, the so-called preforms. Preferred polymer articles are polymer films.
As used herein a "polymer film" generally denotes a polymer article, wherein the spatial extension of the polymer article in each of two dimensions (hereinafter also called as x and y dimension) is at least 20 times, preferably at least 50 times larger as in the third dimension, the latter also being called film thickness and wherein the film thickness is in the range of 100 nm to 2.0 mm, preferably 100 nm to 1000 $\mu$m and more preferably 500 nm to 800 $\mu$m, for example 1 to 800 $\mu$m or 10 to 500 $\mu$m or 10 to 200 $\mu$m.
As used herein a "polymer article" or a "polymer film" denotes an article or a film comprising at least 85 wt.-% of at least one polymer, preferably at least 90 wt.%, more preferably at least 95 wt.-% of at least one polymer and more preferably 98 wt.-% of at least one polymer, the remainder, if any, being compounds selected from the group of known polymer additives which includes flame-retardants, antioxidants, anti-aging agents like antioxidants, antiozonants, heat stabilizers and light stabilizers, processing aids like lubricants, hydrocarbon waxes and fatty acids, plasticizers, tackifiers, colorants, anti-static agents, antimicrobials and odor agents.
As used herein the term "bulk material" denotes the material the polymer article or the nanoporous polymer material obtained after performing the inventive process is made of.
The bulk materials the polymer articles are made of and as used in the inventive process are typically and preferably commercially available polymers.
Typically the bulk materials exhibit a porosity of less than 1.0 %, preferably 0.5 % or less and more preferably 0.1 % or less.

As used herein, nanoporous polymer materials or in a preferred embodiment the nanoporous polymer films generally denote a polymer material or polymer film comprising pores in the nanometer range i.e. from 1 to 1000 nm, preferably 1 to 200 nm and having a porosity of 5.0 % or more, preferably 10.0 % or more

Preferably the bulk materials employed for the inventive process and thus the polymer articles do not comprise any blowing, foaming or other porogenic agents.

As used herein "porogenic agent" denotes any material that is capable of forming pores

i) by liberation or formation of gaseous compounds at the reaction conditions of step 1) and/or

ii) by forming or being an inert inorganic template material at the reaction conditions of step b).

In another preferred embodiment the bulk materials employed for the inventive process and thus the polymer articles do not comprise any nanoinclusion agents.

As used herein "nanoinclusion agent" denotes any material that is capable of being dispersed within the polymer article or polymer film in the form of discrete domains having a size of nano-scale size of 1 nm to 1000 nm and being partially incompatible with the further components of bulk material, in particular with the at least one polymer of the bulk material.

In one embodiment the polymer article and in a preferred embodiment, the polymer film is homogeneous.

In another embodiment the nanoporous polymer material and in a preferred embodiment, the nanoporous polymer film is homogeneous.

As used herein "homogeneous" means compatibility of all components in the bulk material without forming areas of phase separation.

In a preferred embodiment the polymer articles employed in the inventive process and the resulting porous polymer materials are free standing. As used herein "free standing" means the absence of a supporting substrate such as metal foils or other rigid supports which do virtually not loose their rigidity when exposed to the conditions of the process according to the invention.

The glass transition temperature of the bulk material is 40°C or more such as 40°C to 250° or 40°C to 210°C or 40°C to 150°C, preferably 50°C or more such as 50°C to 250° or 50°C to 210°C or 50°C to 150°C and more preferably 70°C or more such as 70°C to 250° or 70°C to 210°C or 70°C to 150°C.

When using the term bulk material in the aforementioned context it encompasses the possibility to evaluate the glass transition temperature either in bulk or as polymer articles e.g. as polymer film to be employed in the inventive process.

If not indicated otherwise the glass transition temperature for the bulk material is measured by differential scanning calorimetry in accordance with DIN EN 11357-2: 2020.

If not indicated otherwise the melting point for a (semi-crystalline) bulk material or polymer article is measured in accordance with DIN 53736.

The polymers of the bulk material and thus the polymer article may be homopolymers or copolymers i.e. polymer comprising repeating units derived from two or more monomers.

The polymers may further be linear or branched, with an average number of branching points being in the range of more than 0 and 1 or less per 100 monomer units of the polymer. Preferred polymers are linear polymers.

In one embodiment the polymers of bulk material may be crosslinked as defined below or not, preferably they are not crosslinked.

If the polymers of the bulk material are crosslinked the term "crosslinked" refers to a polymer whose polymer chains are joined together by covalent chemical bonds, typically via crosslinking molecules or groups, to form a network polymer and whereby the average number of crosslinks is in the range of more than 0 and 1 or less per 100 monomer units of the polymer, preferably more than 0 and 0.5 or less per 100 monomer units of the polymer.

The number average molecular weight $[M_n]$ of the polymer(s) of the bulk material is typically and preferably 200 kg/mol or more, for example from 200 kg/mol to 100,000 kg/mol or 200 kg/mol to 50,000 kg/mol, preferably 500 kg/mol more, for example from 500 kg/mol to 100,000 kg/mol or 500 kg/mol to 50,000 kg/mol or 500 kg/mol to 20,000 kg/mol and more preferably 800 kg/mol or more, for example from 800 kg/mol to 100,000 kg/mol or 800 kg/mol to 50,000 kg/mol or 800 kg/mol to 20,000 kg/mol.

In another embodiment the number average molecular weight $[M_n]$ of the polymer(s) of the bulk material is typically 20 $M_e$ or more, for example 20 $M_e$ to 2,000 $M_e$ or 20 $M_e$ to 500 $M_e$, whereby $M_e$ is defined as the entanglement molecular weight as defined and disclosed for a variety of polymers in [14] Physical Properties of Polymers, 2nd Ed. , 2007 Springer Science and Business Media LLC, Ed. James. E. Mark Chapter 25, p 447: L. J. Fetters, D.J. Lohse and R.H. Colby "Chain Dimensions and Entanglement Spacings".

As shown therein the entanglement molecular weight can be calculated according to the following formula:

$$M_e = \rho RT / G_e$$

wherein $\rho$ denotes the density of the bulk material, R the Boltzmann constant, T the absolute temperature and $G_e$ the plateau modulus (see also equation 25.6 and explanation thereto in [14]) for each polymer.

The plateau modulus $G_e$ is obtainable e.g. from literature or as minimum of tan $\delta$ from rheological master curves at given temperatures (see also [15] Ferry, J. D. Viscoelastic Properties of Polymers, 3rd Ed., Wiley, New York (1980).

Suitable polymers include acrylonitrile-butadiene-styrene, thermoplastic polyimides such as those from phthalimide, cellulose acetate, cellulose-acetate-butyrate, cellulose diacetate, cellulose proprionate, cyclic olefin copolymers such as coplymers of ethylene with norbornene or dicyclopentadiene, ethylene-vinylalcohol copolymers (EVOH), polystyrene, polyamide 11, polyamide 12, polyamide 46, polyamide 6, polyamide 66, polyesters, for example polybutylene terephthalate, polyethylene terephthalate, polyethylene terephthalate glycol, poly(meth)acrylates, for example polymethylmethacrylate, polyarylates, polycarbonates such as polycarbonates of bisphenol A, tetramethylbisphenol A, bisphenol S, 1,1,1-tris(4-hydroxyphenyl)-ethane, dihydroxydiphenylsulfide or 1,1-bis(4-hydroxyphenyl)-3,3,5-trimethylcyclohexane; polyetheretherketones, polyethersulfones, perfluoralkoxyalkanes, polylactic acids, polymethacryl-amides, polyphenyleneether, polyphenylenesulfide, polyphenylenesulfone, polysulfone, polyvinylchloride, styrene-acrylonitrile (SAN) and styrene-maleic anhydride (SMA).

Preferred polymers include polystyrene, polycarbonates, in particular the above mentioned ones and polymethylmethacrylate, whereby polystyrene is more preferred.

It is apparent and known to those skilled in the art that the glass transition temperature $T_g$ depends on the type of polymer employed and its average molecular weight as well as the amount and type of additive present in the bulk material. However, its an easy task for one skilled in the art to adjust the composition of the bulk material and the the polymer article or the polymer film to fulfil the required minimum value or range of $T_g$.

If not indicated otherwise the weight average molecular weight or number average molecular weight is measured by gel permeation chromatography in accordance with DIN 55672.

The PDI is not critical per se.

The polydispersity index (PDI) $[M_w/M_n]$ may be for example in the range of 1.00 to 10.00, preferably from 1.01 to 5.00, more preferably in the range of 1.01 to 1.50, even more preferably in the range of 1.01 to 1.10 and yet even more preferably in the range of 1.03 to 1.08.

However, the total amount of compounds in the bulk material having a molecular weight of less than 200 kg/mol should be 15 wt.-% or less, preferably 10 wt.-% or less and even more preferably 5 wt.-% or less in order to obtain a stable desired porous morphology.

In another embodiment the the total amount of compounds in the bulk material having a molecular weight of less than 20 $M_e$ should be 15 wt.-% or less, preferably 10 wt.-% or less and even more preferably 5 wt.-% or less in order to obtain a stable desired porous morphology.

For the avoidance of doubts such compounds do not only include for example the polymer additives mentioned above but also the share of polymers of the bulk materials having a molecular weight of less than 200 kg/mol or different polymers having a molecular weight of less than 200 kg/mol.

In Step 1) the polymer article, in a preferred embodiment the polymer film is stretched in at least one direction at a temperature of at least 5 k, preferably at least 10 K above the glass transition temperature $T_g$ to form nanopores.

In a more preferred embodiment the polymer article is stretched in at least one direction at a temperature of at least 20 K above the glass transition temperature $T_g$ to form nanopores.

In one embodiment the temperature in step 1) is between at least 5 K, preferably at least 10 K, and more preferably at least 20 K above the glass transition temperature $T_g$ and either the decomposition temperature or, if existent above the glass transition temperature $T_g$ for the chosen bulk material, the melting point.

Where a melting point above the glass transition temperature $T_g$ exists the temperature in step 1) is preferably in the range of 5 K, preferably 10 K, more preferably at least 20 K above the glass transition temperature $T_g$ to 10 K below the melting point, preferably in the range of 20 K above the glass transition temperature $T_g$ to 20 K below the melting point.

Where no melting point exists the temperature in step 1) is preferably in the range of 20 K above the glass transition temperature $T_g$ to the lower of 150 K above the glass transition temperature $T_g$ and 20 K below the decomposition temperature.

As used herein the decomposition temperature denotes the temperature at which the bulk material or the polymer article looses 5.0 % of its weight within 6 hours as measured by thermogravimetric analysis (TGA).

In one embodiment the temperature in step 1) is in the range of 20 K above the glass transition temperature $T_g$ to 120 K above the glass transition temperature $T_g$.

In one embodiment in a step pre-1) the polymer article and in a preferred embodiment the polymer film is exposed to a temperature of at least 5K , preferably at least 10 K, more preferably at least 20 K above the glass transition

# EP 4 442 353 A1

temperature $T_g$ before stretching e.g. for 1 second to 30 minutes, preferably from 30 seconds to 5 minutes and more preferably from 30 seconds to 3 minutes to allow equilibration and removal of any potential preexisting strain on molecular scales.

Stretching may be perfomed uniaxially (in one direction) or in two directions (biaxially), preferably in directions perpendicular to each other or multiaxially in more than two directions.

Polymer articles in particular polymer films tend to deformation resulting from disproportionate strain if stretched in only one direction, such deformation being also often referred to as necking. Necking may prevent proper pore formation and thus should be avoided by applying appropriate means. So in a preferred embodiment of stretching in one direction, necking is at least substantially reduced or avoided by means known per se.

As used in this context "substantially" means that the dimensional loss in the direction perpendicular to stretching is less than 50 % compared to the dimentional loss without applying any suitable means.

For polymer articles and polymer films these suitable means include fixation e.g. by frames, holders, clamps, clips or other fixation means arranged to substantially or entirely retain the shape in the direction perpendicular to the one stretching direction.

Stretching of polymer articles and in a preferred embodiment polymer films may be performed batchwise i.e. article by article or in particular for polymer films continuously.

Stretching can be performed by any method or device known to those skilled in the art. This includes in particular for polymer films longitudinal stretching by common roll-to-roll processes with the upwinding roll running at higher radial speed than the unwinding roll thereby putting the film under the desired tension. In this case necking can e.g. avoided by applying clamps to prevent transversal shrinking i.e. necking.

Stretching can alternatively in particular for polymer films be performed by a common roll-to-roll processes with the upwinding roll e.g. running at the same speed than the unwinding roll (thereby preventing necking) and applying clamps for transversal stretching and whereby the upwinding roll is broader than the unwinding roll.

Biaxial stretching machines for polymer films are commercially available e.g. as Karo IV from Brückner Maschinenbau, Germany.

These processes are herein denoted as and serve as an example for continuous processes.

In one embodiment longitudinal and transversal stretching may be performed sequentially or simultaneously, preferably simultaneously i.e. as biaxial stretching.

In another embodiment stretching is performed by an expandable frame where the polymer article is mounted on. Such frames can be e.g. quadratic, rectangular or angular with movable sections.

In another embodiment a polymer article is mounted between two pressurizable chambers or as a barrier between the ambient atmosphere and one pressurizable chamber and stretched by exposing it to a pressure difference.

As used herein the term "pressurizable" chamber denotes any chamber which can be pressurized above or below ambient pressure by suitable means like vacuum pumps, compressors and other devices of similar nature.

These processes are herein denoted as and serve as an example for batchwise processes.

Multiaxial stretching may be performed via known blow molding procedures such as extrusion blow molding, injection blow molding, and injection stretch blow molding for any type of polymer articles. Specific examples include bubble, or double bubble film extrusion processes.

Stretching is for example performed such that the expansion factor of the polymer article and in a preferred embodiment the polymer film in stretching direction is at least 1.05, preferably at least 1.20, for example 1.20 to 3.50 or 1.20 to 4.00 or 1.20 to 5.00, more preferably at least 1.50 for example 1.50 to 3.50 or 1.50 to 4.00 or 1.50 to 4.00. For unidirectional strechting a stretching factor of for example 1.20 means that the length of the polymer article and in a preferred embodiment the polymer film after stretching is 20 % higher than in the state before strechting. In this case in a preferred embodiment necking (i.e. a "stretching" factor in the direction perpendicular to stretching of smaller than 1.00) is completely avoided.

Where strechting is performed in more than one direction it is for example performed such that the surface area of the polymer article and in a preferred embodiment of the polymer film is increased by a factor of at least 1.10, preferably at least 1.40 for example 1.40 to 25.00 or 1.40 to 20.00 or 1.40 to 16.00 or 1.40 to 10.00, more preferably at least 2.00, for example 2.00 to 25.00 or 2.00 to 20.00 or 2.00 to 16.00 or 2.00 to 10.00.

As used herein the term "surface area" denotes the macroscopic surface area defining the overall outer size or dimension of the polymer article without consideration of any inner surface increase by nanopore formation.

The stretching time may be for example from 1 s to 60 minutes, preferably from 30 s to 45 minutes or from 5 minutes to 30 minutes.

In one embodiment stretching may be accomplished with for example with constant force during the stretching time or with constant expansion factor per time unit or any other strain profile over the stretching time, whereby stretching with constant force is preferred.

It is known to those skilled in the art that the dimensional and time or speed limits of stretching are dependent on the polymer film material, temperature and the thermal properties of the polymer film material employed as well as the initial thickness of the film. However depending on the desired porosity of the final nanoporous film these parameters can be easily determined by a very few orienting experiments.

During stretching the polymer article may be simultaneously formed into any desired shape or remain in its original shape.

During stretching of the polymer article, in particular polymer films whether uniaxially, biaxially or multiaxially, the thickness, in particular the film thickness typically freely adjusts to a lower thickness than before stretching.

In Step 2) the stretched polymer article, in a preferred embodiment the polymer film is cooled to a temperature of 10 K below the glass transition temperature $T_g$ or less, preferably to a temperature of 20 K below the glass transition temperature $T_g$ of the bulk material or less.

In one embodiment in step 2) the stretched polymer article, in a preferred embodiment the polymer film is cooled to a temperature in the range of 77 K and at least 20 K below the glass transition temperature $T_g$ of the bulk material, preferably to a temperature in the range of 77 K, i.e. the boiling point of liquid nitrogen at normal pressure and at least 50 K below the glass transition temperature $T_g$ of the bulk material and more preferably to a temperature in the range of 77 K and at least 100 K below the glass transition temperature $T_g$.

Cooling can be performed by any method or device known to those skilled in the art. This includes exposing the stretched polymer article to a stream of cool air or other gases, contacting the stretched polymer article with a cooled surface or a cooled liquid cooling agent that does virtually not dissolve the nanoporous polymer material. Such liquid cooling agents also include liquid nitrogen or other liquid materials which are gaseous at 20°C.

In one embodiment the stretched polymer article, and in a preferred embodiment the stretched polymer film is dipped into liquid nitrogen in step 2).

Typically, the time to perform step 2) is 15 minutes or less, for example 50 milliseconds to 15 minutes or 1 second to 15 minutes, preferably 1 minute or less, for example 50 milliseconds to 1 minute or 1 second to 1 minute more preferably 10 seconds or less, for example 50 milliseconds to 10 seconds or 50 milliseconds to 10 seconds.

Steps 1) and 2) together are performed within a period of time short enough to at least partially preserve the nanopores formed in step 1).

Typically, the time to perform both steps 1) and 2) is 2 hours or less, for example 30 seconds to 2 hours or 5 minutes to 2 hours, preferably 1 hour or less, for example 30 seconds to 1 hour or 5 minutes to 1 hour more preferably 45 min or less, for example 30 seconds to 45 minutes or 5 minutes to 31 minutes.

It is apparent to those skilled in the art, that the degree of pore formation upon stretching is not only dependant on the stretching conditions but also the structure and type of the bulk material or the polymer(s) it contains, its glass transition temperature $T_g$ and thus also the process temperature employed in step 1) all of which have an impact on the most suitable time range to perform process steps 1) and 2).

While this time range can be easily determined by a very few orienting results it can also alternatively be determined based on rheological properties of the bulk material of the polymer article, or in a preferred embodiment the polymer film employed in the process according to the invention. The stretching factors as given above likewise apply hereto as well.

Therefore, in another embodiment, the time to perform steps 1) and 2) is in the range from 1 $\tau_d$ to 100 $\tau_d$, preferably 1 $\tau_d$ to 80 $\tau_d$ and more preferably 1 $\tau_d$ to 50 $\tau_d$, with $\tau_d$ being the reptation disentanglement time of the bulk material of the polymer article, which is also called relaxation time. The relaxation time can be taken as reciprocal $1/\tau_d$ at the lower frequency crossing point of the storage modulus G' and loss modulus G" from master curves obtained from respective measurements using dynamic mechanical analysis (DMA) in accordance with DIN EN ISO 6721:2019.

The method is further outlined in the experimental part for the polystyrene employed for the inventive examples.

The process according to the invention leads to stable porous polymer materials which exhibit numerous unprecedented characteristics.

It is an important finding that after performing steps 1) and 2) the porous polymer films or materials may be stored at temperatures up to 10 K below the glass transition temperature $T_g$ while preserving their porous structure and characteristics.

In one embodiment the nanoporous polymer materials, which are obtainable by performing the inventive process, exhibit a pore volume $(V_p)$ of 0.05 to 0.60 $cm^3/cm^3$ or a porosity $(\phi)$ of 5 to 60 %, preferably a pore volume $(V_p)$ of 0.05 to 0.50 $cm^3/cm^3$ or a porosity $(\phi)$ of 5 to 50 % and more preferably a pore volume $(V_p)$ of 0.08 to 0.45 $cm^3/cm^3$ or a porosity $(\phi)$ of 8 to 45 % as measured by gas adsorption (BET) experiments in accordance with DIN 66131 using liquid nitrogen at 77 K.

The mean pore diameter determined by the same method is typically in the range of 2 to 200 nm, preferably of 2 to 100 nm.

In one embodiment, the pores of the nanoporous polymer material or polymer film according to the invention having a diameter of 2 to 20 nm account for 70 % or more of the total pore volume, preferably for 80 % or more.

In another embodiment the pore diameter distribution of the porous polymer film or material is such that 50 % of the total pore volume are in a range of 10 nm or less, preferably between 2 nm and 10 nm.

In one embodiment the nanoporous polymer film or material according to the invention has a specific BET surface area ($SSA_{BET}$) of 20 to 1000 $m^2/g$, preferably of 50 to 1000 $m^2/g$ as determined in accordance with the method described in detail in the experimental part.

The thickness of the porous polymer film obtained in a preferred embodiment of according to the invention is typically in the range as defined for polymer films in general above. However, it is apparent to those skilled in the art that upon stretching the thickness of the polymer film typically decreases in dependance on the stretching conditions.

A main finding of the invention is that the nanoporous polymer films and materials exhibit unexpected and unusual elastic properties.

To evaluate elastic properties of a polymer material typically Young modulus, the Poisson ratio, bulk modulus and shear modulus are examined.

In order to apply a non-contact, non-invasive and zero-strain method for evaluation of the elastic properties of the porous polymer films according to the invention Brillouin Light Spectroscopy (BLS) was applied.

Notably, BLS can yield both the elasticity of the stretched chains, a consequence of the process according to the invention, and the polymer material of polymer film porosity without any disturbance of the probe. The method to obtain the above mentioned values is explained in detail in [16] Yu Cang, Jiaqi Liu, Meguya Ryu, Bartlomiej Graczykowski, Junko Morikawa, Shu Yang, George Fytas, "On the origin of elasticity and heat conduction anisotropy of liquid crystal elastomers at gigahertz frequencies", Nat. Comm. 13, 5248 (2022), [17] Penciu, RS; Kriegs, H; Petekidis, G; Fytas, G; Economou, "Phonons in colloidal systems", J. Chem. Phys. 118, 5224 (2003) and [18] F.Kargar, A.A.Balandin Nat.Photonics 15, 720-731 (2021).

Therefore, all values and comparisons as given below refer to values obtained by BLS as further described in detail in the experimental part. It is important to note that the BLS measurements result in moduli for the polymer frame within the porous polymer film and not the moduli that would be measured by macroscopic tensile testing.

To calculate the moduli as used for the below comparisons the effective moduli measured by BLS were multiplied with the polymer volume fraction ($1-V_p$), see also data in the experimental part. It was found that the nanoporous polymer materials and preferably the nanoporous polymer films exhibit an only weak decrease of moduli with porosity e.g. of around 10 % at a porosity of 43 % (see experimental part). This moderate drop of the moduli is due to the enhanced moduli of the stretched polymer chains.

In a preferred embodiment, the Relative Young Modulus Increase factor $RYMI_x$ for a given porosity in % is 0.50 or more whereby the $RYMI_x$ is calculated as follows:

$$RYMI_x = (100 \times (\text{Young Modulus [GPa] at a Porosity of } x \% / \text{Young Modulus [GPa] at a Porosity of 0 \% } - 1)) / \text{Porosity [\%]}.$$

In one embodiment the shear modulus G of the nanoporous polymer film is higher than the shear modulus of bulk material as measured by BLS.

In a preferred embodiment, the Relative Shear Modulus Increase factor $RSMI_x$ for a given porosity in % is 0.40 or more whereby the $RYMI_x$ is calculated as follows:

$$RSMI_x = (100 \times (\text{Shear Modulus [GPa] at a Porosity of } x \% / \text{Shear Modulus [GPa] at a Porosity of 0 \% } - 1)) / \text{Porosity [\%]}.$$

In one embodiment the transversal and longitudinal sound velocities $C_T$ and $C_L$ of the porous polymer film are higher than the sound velocity of the bulk material obtainable as mentioned above for the Young modulus and as measured by BLS.

To determine whether the Young modulus or shear modulus of the nanoporous polymer film is higher than the Young Modulus of the bulk material, the nanoporous polymer material or the nanoporous polymer is heated to a temperature of 50 K above the glass transition temperature, held at this temperature for 60 minutes until the nanoporous structure disappeared and then subjected to a BLS measurement at the same temperature as the nanoporous polymer material or nanoporous polymer film. To account for the porosity the effective modulus is multiplied by ($1-V_p$) as described above.

Without wanting to be bound by theory but in order to understand the process steps and the pore formation and subsequent stabilization a short explanation of the dynamics within the polymer materials during processing might be helpful:

The polymer articles used in the inventive process are employed in step 1) well above their glass transition temperature.

Therefore in practical terms the polymer articles are present as a highly entangled polymer melt. Chains of the molten polymer typically assume a Gaussian random walk with chain extension. A plurality of polymer chains present in the melt share the same given volume thereby creating a high average density of topological constraints. This not only leads to a characteristic chain length, the entanglement length $N_e$ or entanglement molecular weight $M_e$, but also to polymer dynamics following the well-accepted tube model. The topological constraints in the polymer chain which increase with molecular weight lead to very slow dynamics and slow polymer chain relaxation, i.e. to high relaxation times which together with temperature dependent bead friction make them long enough for the polymer processing according to the invention.

Upon stretching the polymer article within the given timeframe the chain conformation globally follows the deformation, while relaxing on small scales which avoids local stresses in chains and thus strain induced breakage. The competition of a very slow large scale chain relaxation and surface minimizing surface tension then produces stable nanopores within the polymer.

The polymer chains extend beyond several nanopores forming a stable, highly entangled network. In order to avoid complete chain relaxation in the melt, the stretched polymer article is cooled in step 2) well below the glass transition temperature to "freeze" and thus preserve the nanoporous structure obtained in step 1) with expanded polymer chains. These expanded polymer chains are presumably also responsible for the high degree of reenforcement observed for the inventive nanoporous polymer materials and in a preferred embodiment the nanoporous polymer films.

Applications

Due to their unique properties described above the nanoporous polymer materials according to the invention and obtainable according to the inventive process are suitable for a large variety of applications. Therefore the invention also encompasses the use of the nanoporous polymer materials according to the invention or nanoporous polymer materials obtainable according to the inventive process as membranes in filtration, purification and separation applications, as solid support for sensors and catalysts, diffusion layers for gas sensors, scaffolds for tissue engineering, low electric constant materials for microelectronic devices, as photonic band gap materials and for other optical applications.

The invention thus further encompasses membranes, solid supports for sensors and catalysts, diffusion layers, scaffolds, low electric constant materials, photonic band gap materials and optical materials comprising a nanoporous polymer material according to the invention.

A major advantage of the present invention is the possibility to produce nanoporous polymer materials with a well defined and uniformly low pore size and unprecedented elastic properties without the need of blowing, foaming or other porogenic agents, no nanoinclusion agents or other chemical processing.

Further no supporting substrates or matrix forming compounds are required. Instead, known mechanical deformation procedures in combination with a specific temperature profile surprisingly lead to new porous polymer materials which are long-term stable at ambient conditions.

In the following, the present invention is illustrated by examples which however not intended to limit the scope of invention.

**Experimental section:**

**I Chemicals and Methods**

**1 Scanning electron microscopy (SEM)**

SEM images were recorded with a LEO Gemini 1530 SEM instrument. For SEM imaging, a sample of around 5 mm diameter was cut out from the central hat area. This piece was immersed in liquid nitrogen for a few seconds and then brittle fractured into two pieces. The fracture surface was then mounted in a 90° cross-section SEM holder and examined. The sample surface was not sputtered with a conductive layer to avoid covering any small pores and to image the fracture surface as pristine as possible. Typical imaging conditions were a working distance of 1.3 mm at an electron landing energy of 250 eV using the in-lens secondary electron detector.

**2 Scanning Force Microscopy (SFM)**

SFM investigations were recorded with a Dimension Icon Atoic Force Microscope of Bruker with Scan Analyst. Experiments were performed using the Peak Force Tapping Mode in Air with a Micro Cantilever, Opus 160 AC NA of Nano and More, Germany with a tip at the very end of the cantileverand with a resonance Frequency of 300 kHz, a spring constant of 26 N/m and a reflective aluminum back side coating.

### 3 BET

The porosity and BET surface measurements were performed by physisorption with nitrogen ($N_2$) at 77 K, after degassing the respective sample at 423 K for 20 h under vacuum, using a Quantachrome Autosorb-1 porosimeter. The specific surface area was calculated by applying the Brunauer-Emmet-Teller (BET) model.

### 4 Brillouin Light Scattering (BLS)

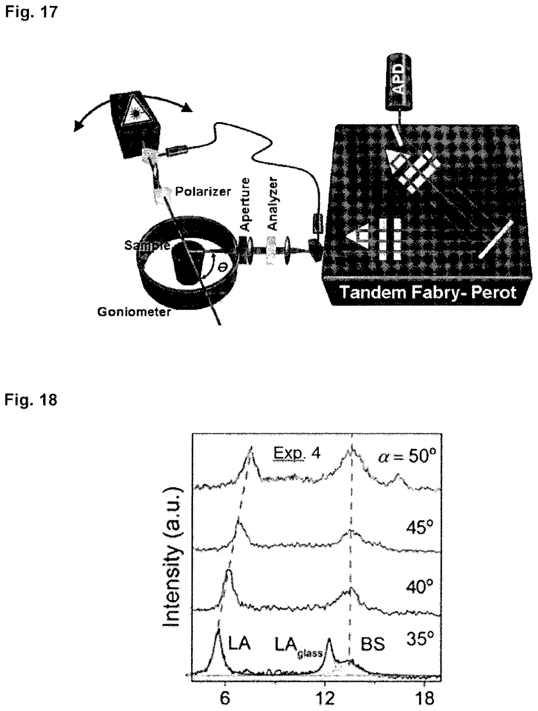

Brilloin Light Scattering (BLS) spectra were taken on equipment constructed using standard scientific equipment including a continuous wave (cw) laser, a tandem Fabry-Perot interferometer (TFBI) (JRS Scientific Instruments, Switzerland), a goniometer and an avalanche photodiode (APD) as shown schematically in Figure 17.

Specifically, a solid state Nd-YAG laser with $\lambda$=532 nm operating at 100 mW output power, a beam splitter for the reference beam, a focusing lens, and a Glan-Thomson polarizer (Halle,Berlin) were mounted on the arm of a goniometer. The scattered light at a selected scattering angle $\theta$ with selected polarization determined by the analyzer was focused on a pinhole -150 mm located at the entrance of the piezoelectrically scanned TFPI and detected by an avalanche photodiode connected with a multichannel analyzer. Typical accumulation time for a BLS spectrum from a 50 $\mu$m thick (nanoporous) polymer film was about 10min. To keep the TFPI stabilized over days, a reference beam was used during the scanning of the frequency 0.6 GHz about the central Rayleigh line by means of a synchronized shutter. Hence, strong elastic scattered light from the samples did not enter the APD detector.

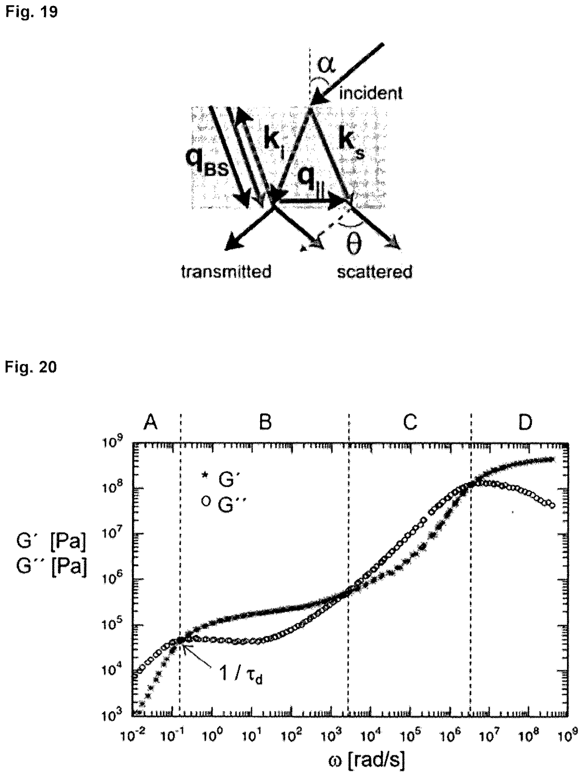

To obtain the longitudinal sound speed $C_L$ of the (nanoporous) polymer films, the BLS spectrum was recorded at $\theta$=90° using the geometry illustrated in Fig. 19 which allowed simultaneous access to two scattering wave vectors, $q_\parallel$=($4\pi/\lambda$)sin$\alpha$ and $q_{BS}$ = $4\pi n/\lambda$ at back scattering, where n is the membrane refractive index.

Specifically, in Brillouin Light Scattering the frequency of scattered light from propagating thermal phonons depends on their wave vector q and the sound speed, c, in the medium and is Doppler shifted by $\pm$f around the frequency of the incident monochromatic light of wavelength $\lambda$(= 532 nm). The probed q = ks - ki is defined by the scattered (ks) and incident (ki) light wavevectors, forming a preselected scattering angle, 10° < $\theta$ < 150 ° by means of goniometer rotation of the incident laser beam around the optical axis (TFPI axis and incident laser focus) of the sample cell, see [18] Kargar, F., Balandin, A.A.: Brillouin-mandelstam light-scattering spectroscopy. Nat. Photon. 15, 720-731 (202 [43]. The frequency shift f = $\pm$cq/($2\pi$) was resolved by a high resolution tandem Fabry-Perot interferometer as described above. q = ($4\pi n/\lambda$)/sin($\theta$/2), in general depends on the refractive index (n), scattering angle ($\theta$), and the polarization of the probed phonons, which was selected by polarization combination of incident and scattered light. Longitudinal (LA) and transverse (TA) acoustic phonons were probed for parallel (W) and crossed (VH) polarized light configuration, respectively. The first letter (V) denotes vertically polarized incident light, whereas the second letter V(H) is vertically (horizontally) polarized scattered light with respect the scattering plane, (ki , ks). Depending on the polarization of the probed phonons, the measured sound velocity from the BLS spectra can be either the longitudinal, $c_L$ or in the case of solids transverse $c_T$. The n-dependence of q was bypassed in the specific transmission geometry for which the incidence laser angle, $\alpha$ = $\theta$/2, and q = ks -ki directs in the (nanoporous) polymer film plane with magnitude qll = $4\pi$ sin $\alpha/\lambda$. In the reflection geometry q directs normal to the film plane with q$\perp$ = $4\pi$ p (n2 - sin $\alpha$2/$\lambda$) depending on n normal to the plane. For temperature scan measurements, the sample temperature was monitored with a platinum resistance temperature detector and controlled with a temperature controller. The sample was allowed to isothermally equilibrate for 20 min before recording spectra.

### 5 Chemicals

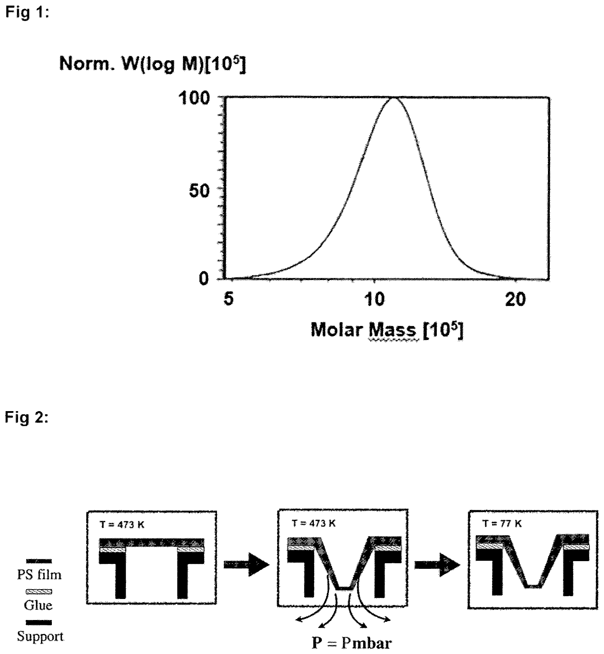

Monodisperse atactic polystyrene (PS) with a number average molecular weight of 1037 kg/mol, a weight average molecular weight of 1084 kg/mol and thus a polydispersity index Mw/Mn of 1.04 was used for all examples 1 to 4. It was obtained from Sigma Aldrich (Germany). Figure 1 shows the weight distribution of the polystyrene as obtained from GPC experiments.

### II Examples

### Examples 1-4

Well equilibrated transparent polystyrene films were prepared by pressing polystyrene as obtained 250 mg under 20 kN load and at a temperature of 433 K, i.e. well above the glass transition temperature Tg of 380 K, for one hour.

To perform step 1) according to the invention the resulting polystyrene film was attached to one end of a vacuum flange using a cyanoacrylate glue. The vacuum flange hat an aperture of 1.75 cm diameter. The vacuum flange with the attached film was then put into an oven and maintained at a temperature of 473 K for two minutes.

Thereafter a vacuum of 50 hPa was applied for different durations followed by cooling the stetched film down to 77 K by dipping it into a bath with liquid nitrogen as step 2) according the inventive process. The time to perform step 2) was in each example estimated to be around 5 s or 0.13 $\tau_d$ (see calculation below)

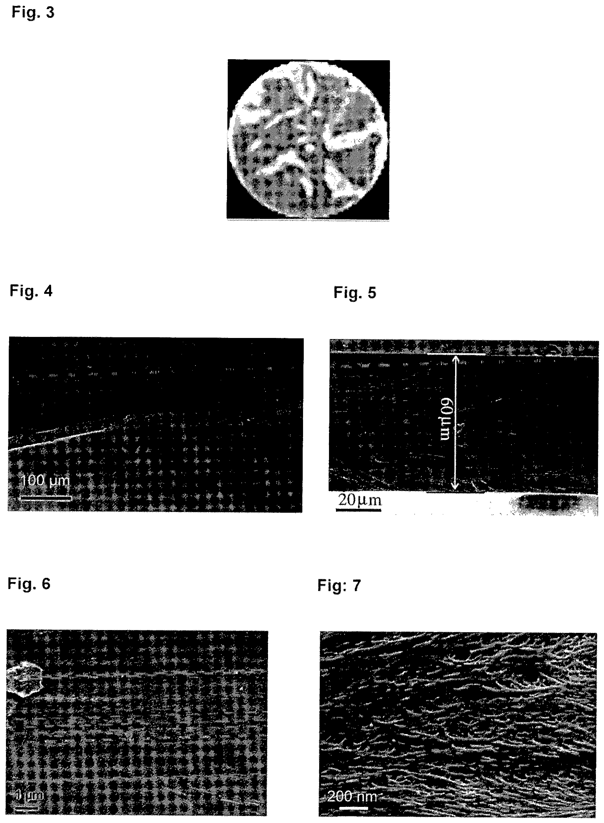

The resulting hat-like porous polymer films as shown in Figure 3 were stored at room temperature, without taking any further precautions. Depending on the duration of vacuum pressure applied, different degrees of stretching were achieved in the polymer films as shown in Table 1 below

To measure the specific properties of the (porous) polymer films according to examples 1 to 4 a small cut out with a diameter of 5 mm at the top of the hat-like polymer film was taken as indicated by the black circle shown in Figure 3.

Figure 2 shows a schematic representation of the experimental protocol to deform the polystyrene films into 'hat' like shape using vacuum, via the steps of preheating of the polymer film at 473 K (left side) applying a pressure of 50 mbar to deform the film into a "hat-like" shape (middle), and quenching the stretched film to 77 K.

Table 1 summarizes the experimental details of one unstretched film (example 1 for comparison) and three dirfferently stretched nanoporous polymer films according to the invention.

Table 1: Experimental details for examples 1 to 4

| Ex. | Film thickness before stretching [$\mu$m] | Film thickness after stretching [$\mu$m] | Duration of stretching [mins]/ [$\tau_{d***}$] | Mass of 5mm disc [mg] |
|---|---|---|---|---|
| 1* | 91.0 | 91.0 | 0/0 | 1.759 |
| 2** | 110.0 | 106.0 | 15/22.3 | 1.958 |
| 3** | 80.0 | 40.0 | 21 / 31.2 | 0.655 |
| 4** | 100.0 | 12.0 | 30/44.6 | 0.174 |
| *: For comparison **: According to the invention ***: $\tau_d$ = 40.4 s , see below | | | | |

Table 1 also indicates the multiples of the relaxation time $\tau_d$ for the polystyrene employed at 473 K. As a basis the master curve shown in figure 20 was used which was measured for polystyrene with $M_n$ of 200 kg/mol at a temperature of 433 K. for this polymer $\tau_{d, 433K}$ is 1/0.16 s = 6.25 s.

In order to account in a first step for the higher stretching temperature of 473 K a time shift factor has to be applied. This temperature shift factor is polymer specific and can either be determined experimentally by the shift of the high frequency crossing point shown in figure 20 at different temperatures or looked up in the literature (see for example [15] J.D. Ferry, 'Viscoleastic properties of polymers', Wiley 3rd. ed, 1980 and [19] W.W. Greassley, "Polymeric Liquids & Networks: Dynamics and Rheology", Taylor & Francis 2008).

Here we find a temperature shift factor, $a_T$ = 0.02393 at a temperature T = 473 K for polystyrene with $M_n$ = 200Kg/mol, leading to a relaxation time $\tau_{d, 200 kg/mol, 473K}$ = $a_T \times \tau_{d, 200 kg/mol, 433K}$ = 6.25 s x 0.02393 = 0.15 s.

In a second step the change of relaxation time as a function of chain length or molecular weight has to be considered (see [18]).

For polystyrene with $M_n$ = 1,037 Kg/mol the desired relaxation time for the polystyrene employed in the examples can be calculated to

$$\tau_{d, 1037 kg/mol, 473K} = (1037/200)^{3.4} \times \tau_{d, 200 kg/mol, 473K} = 40.40 \text{ s.}$$

The relaxation times for other polymers can easily be taken from master curves directly, taken from literature or, as shown above, calculated if temperatures and molecular weights of literature values differ for the polymer to be employed at a certain stretching temperature.

**Characterization:**

The porous polymer films according to examples 1 to 4 were analyzed and characterized in detail.

SEM and SFM

Figures 4 and 5 show the fracture surface of the film in a plane perpendicular to the expansion plane a different magnifications. Even though the sample was not taken form the central hat like area in example 4 a decreased film thickness (60 nm) can be taken from the SEM image of Figure 5. The porous structure of the polymer film over a large area can be seen in Figures 6 and 7 showing a zoom in with larger magnifications.

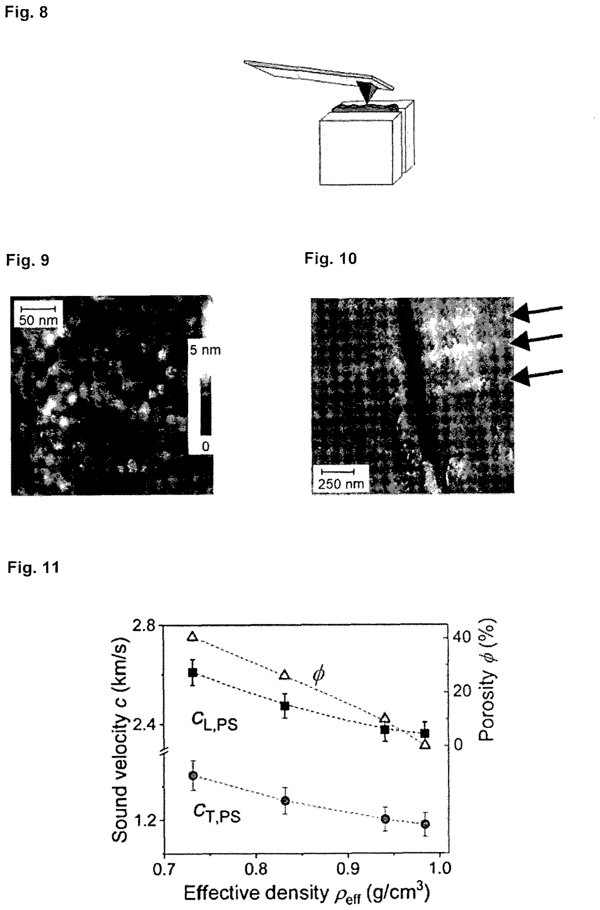

Scanning Force Microscopy (SFM) is a well established tool to analyze surface structures in detail. For SFM the same fracture surfaces as used for SEM were used and mounted in a 90° 8 CONTENTS cross-section SEM holder. SFM experiments were made in tapping mode on surfaces, which have been cut by a diamond knife (Microtome UC6 from Leica, knife from Diatome). The film was left in the holder of the microtome and the film protruded by approx. 100 $\mu$m from the holder surface as can be seen in Figure 8. All measurements were performed close to the center of the film. The high resolution SFM topography exhibits a granular structure with feature diameters down to 10 nm as can be seen in figure 9. At lower magnification stripes are visible which are caused by unevenness of the blade of the cutting knife (see Figure 10).

BET Experiments

To confirm and complement the porosity analysis of the expanded samples, gas adsorption (BET) experiments in accordance with DIN 66131 were performed for polymer films according to examples 1 to 4 using liquid nitrogen at 77 K. For background see also [20] Brunauer, S., Emmett, P.H., Teller, E.: Adsorption of gases in multimolecular layers. Journal of the American Chemical Society 60(2), 309-319 (1938).

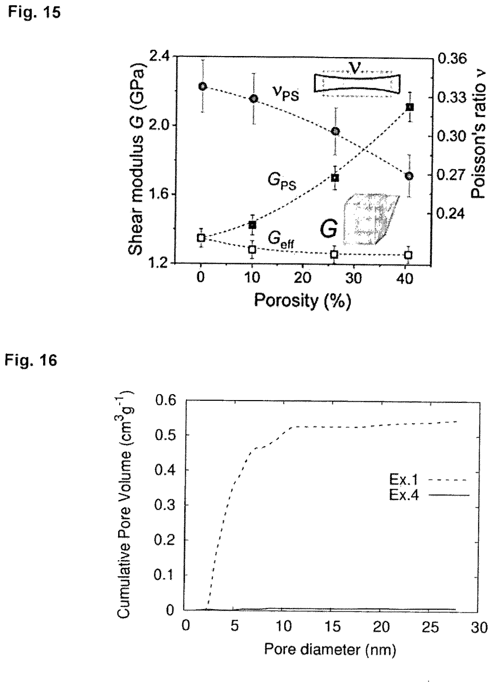

The results in terms of comparison of cumulative-pore-volume for example 1 (for comparison) and example 4 according to the invention is shown in Figure 16.

The pore volume Vp for the porous polymer film of example 4 is 0.552 $cm^3g^{-1}$ translating into a porosity of 43 % whereas it is about a factor of 70 lower, namely about 0.008 $cm^3g^{-1}$ or a porosity of 0.7 % for the polymer film of example 1.

The BET technique was developed to estimate the total surface area of solid powders. It does not directly measures pore sizes or pore size distributions. Typically, one obtains an value of the total pore volume from the volume of nitrogen taken up at a pressure of 1013 hPa and a temperature of 77 K. Similarly, the BET surface area measurements provide a value of total surface area of the pores. Assuming cylindrical pores, the total pore volume Vp is calculated as Vp = $\pi$d2 l/4 and the BET surface area is S(BET) = $\pi$dl. Here d is the mean pore diameter and l is the total length of the pores. Using the aboveaforementioned two equations, diameter d of pores is calculated by eliminating the pore length l.

Table 2 shows the values obtained by weighing the 5 mm diameter cut out from polymer films according to examples 1 to 4 and calculating the density from film thickness and weight as well as the BET values.

Table 2:

| Exp. | Mass of 5mm disc [mg] | Density [g/cm$^3$] | Porosity [%] | S (BET) [m$^2$/g] |
|---|---|---|---|---|
| 1* | 1.759 | 0.985 | 0 | 3 |
| 2** | 1.958 | 0.941 | 10 | not determined |
| 3** | 0.655 | 0.819 | 26 | not determined |
| 4** | 0.174 | 0.732 | 43 | 239 |
| *: For comparison **: According to the invention | | | | |

Brillouin Light Scattering

As can be seen in Figure 18 the BLS spectrum taken from the nanoporous polymer film according to example 4 consists of two peaks, one at low frequency $f_{90}$= ($c_L/2\pi$)$q_{\parallel}$ corresponding to the scattering wave vector $q_{\parallel}$=0.0167nm$^{-1}$ and the second at higher $f_{ss}$= ($c_L/2\pi$)$q_{BS}$ at the backscattering qas =(0.0236 n) nm$^{-1}$. The two frequencies lead the concurrent determination of $c_L$ and n which lead to the determination of elastic modulus, M=$\rho c_L{}^2$ and the porosity p= p= (n$^2$-1)/ ($n_{PS}{}^2$-1), where p is the density of the porous film and $n_{PS}$ is the refractive index of polystyrene. This single experiment yields both the porosity and the elasticity of the same (nanoporous) polymer film.

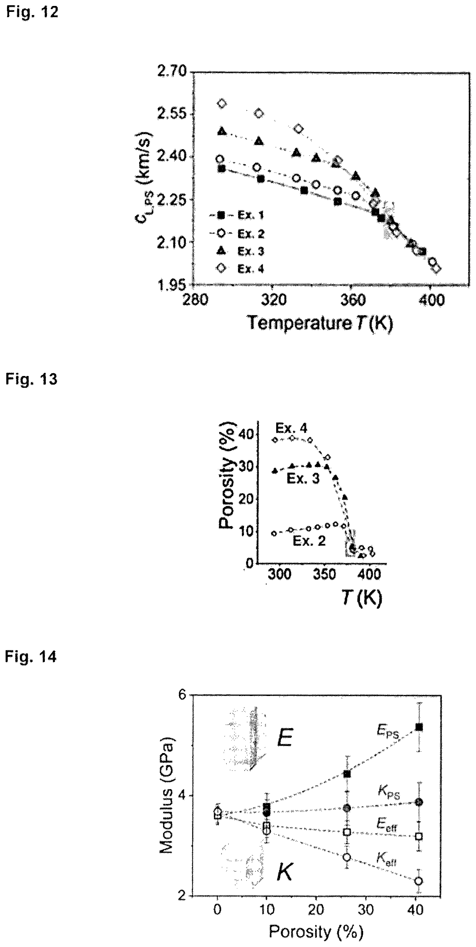

The unique feature of the nanoporous polymer films according to the invention is the stretching of the polystyrene chains demonstrated by the higher transversal sound speed compared to the bulk polystyrene (see Figure 11). Notably this difference increases with porosity (see Figure 12) due to the stronger polymer film stretching.

Table 3 shows the values for the longitudinal and transversal sound speeds $C_T$ and $C_L$ as measured by BLS for examples 1 to 4.

Table 3:

| Example | Porosity (%) | $C_T$ [km/s] | $C_L$ [km/s] |
|---------|-------------|-------------|-------------|
| 1 | 0 | 1.16 | 2.35 |
| 2 | 10 | 1.2 | 2.36 |
| 3 | 26 | 1.32 | 2.45 |
| 4 | 43 | 1.44 | 2.61 |

The nanoporous polymer films are stable at ambient conditions but loose porosity as the chains relaxed back to the equilibrium conformation upon longer exposure at temperatures above $T_g$ (see Figure 13).

The stretching of the polystyrene chains and the resulting reinforcement of the nanoporous polymer films is also demonstrated by the higher Young modulus $E_{PS}$ compared to the bulk polystyrene (see Figure 14) as well as the higher shear modulus $G_{PS}$ (see Figure 15) which even relatively increase with increasing porosity (see Tables 4 and 5 and the relative modulus increase factors $RYMI_x$ and $RSMY_x$ as disclosed in the general description above).

Table 4:

| Ex. | Porosity (%) | Effective Young Modulus [GPa] | Young Modulus* [GPa] | Young Modulus Increase [%] | $RYMI_x$ |
|-----|-------------|------------------------------|----------------------|----------------------------|----------|
| 1 | 0 | 3.60 | 3.60 | 0 | 0.0 |
| 2 | 10 | 3.40 | 3.82 | 6.1 | 0.61 |
| 3 | 26 | 3.28 | 4.31 | 19.7 | 0.76 |
| 4 | 43 | 3.19 | 5.52 | 53.3 | 1.24 |
| * Effective Young Modulus as measured by BLS divided by polymer volume (1-$V_d$) | | | | | |

Table 5:

| Example | Porosity (%) | Shear Modulus* [GPa] | Shear Modulus Increase [%] | $RSMI_x$ |
|---------|-------------|----------------------|----------------------------|----------|
| 1 | 0 | 1.36 | 0 | 0.0 |
| 2 | 10 | 1.42 | 4.4 | 0.44 |
| 3 | 26 | 1.64 | 20.6 | 0.79 |
| 4 | 43 | 2.15 | 58.1 | 1.35 |
| * Effective Shear Modulus as measured by BLS divided by polymer volume (1-$V_d$). | | | | |

**Claims**

1. A process for the preparation of nanoporous polymer materials, preferably having a porosity of 5.0 % or more and preferably 10.0 % or more, comprising at least the steps of

   1) stretching a polymer article in at least one direction at a temperature of at least 5K , preferably at least 10 K, more preferably at least 20 K above the glass transition temperature $T_g$ to form nanopores and thereafter
   2) cooling the stretched polymer article to a temperature of 10 K, preferably 20 K below the glass transition temperature $T_g$ or less
   wherein the polymer article is made from a bulk material comprising at least 85 wt.-% of at least one polymer, preferably at least 90 wt.-%, more preferably at least 95 wt.-% of a least one polymer and more preferably 98 wt.-% of at least one polymer, preferably one polymer and having a glass transition temperature of 40°C or more, preferably 50°C or more, and more preferably 70°C or more and
   wherein steps 1) and 2) together are performed within a period of time short enough to at least partially preserve the nanopores formed in step 1).

**2.** The process according to claim 1, wherein the polymer article is a polymer film, preferably a polymer film having a film thickness of 100 nm to 2.0 mm, preferably 100 nm to 1000 $\mu$m and more preferably 500 nm to 800 $\mu$m.

**3.** The process according to claim 1 or 2, wherein the bulk material and thus the polymer article does not comprise any blowing agents, foaming agents or other porogenic agents and/or nanoinclusion agents.

**4.** The process according to any one of claims 1 to 3, wherein the number average molecular weight [$M_n$] of the polymer(s) of the bulk material is 200 kg/mol or more, preferably 500 kg/mol more, and more preferably 800 kg/mol or more or alternatively 20 $M_e$ or more, whereby $M_e$ is defined as the entanglement molecular weight.

**5.** The process according to any one of claims 1 to 4, wherein the at least one polymer of the bulk material is selected from the group including acrylonitrile-butadiene-styrene, thermoplastic polyimides, cellulose acetate, cellulose-acetate-butyrate, cellulose diacetate, cellulose proprionate, cyclic olefin copolymers, ethylene-vinylalcohol copolymers (EVOH), polystyrene, polyamide 11, polyamide 12, polyamide 46, polyamide 6, polyamide 66, polyesters, for example polybutylene terephthalate, polyethylene terephthalate, polyethylene terephthalate glycol, poly(meth)acrylates, for example polymethylmethacrylate, polyarylates, polycarbonates, preferably polycarbonates of bisphenol A, tetramethylbisphenol A, bisphenol S, 1,1,1-tris(4-hydroxyphenyl)-ethane, dihydroxydiphenylsulfide or 1,1-bis(4-hydroxyphenyl)-3,3,5-trimethylcyclohexane; polyetheretherketones, polyethersulfones, perfluoralkoxyalkanes, polylactic acids, polymethacryl-amides, polyphenyleneether, polyphenylenesulfide, polyphenylenesulfone, polysulfone, polyvinylchloride, styrene-acrylonitrile and styrene-maleic anhydride (SMA), whereby polystyrene, polycarbonates and polymethylmethacrylate are preferred and polystyrene is even more preferred.

**6.** The process according to any one of claims 1 to 5, wherein the polydispersity index (PDI) [$M_w/M_n$] of the polymer(s) of the bulk material is in the range of 1.00 to 10.00, preferably from 1.01 to 5.00, more preferably in the range of 1.01 to 1.50, even more preferably in the range of 1.01 to 1.10 and yet even more preferably in the range of 1.03 to 1.08.

**7.** The process according to any one of claims 1 to 6, wherein the total amount of compounds in the bulk material having a molecular weight of less than 200 kg/mol or alternatively of less than 20 $M_e$ is 15 wt.-% or less, preferably 10 wt.-% or less and even more preferably 5 wt.-% or less.

**8.** The process according to any one of claims 1 to 7, wherein stretching is performed such that the expansion factor of the polymer article in each stretching direction is at least 1.05, preferably at least 1.20, for example 1.20 to 3.50 or 1.20 to 4.00 or 1.20 to 5.00, more preferably at least 1.50 for example 1.50 to 3.50 or 1.50 to 4.00 or 1.50 to 4.00.

**9.** The process according to any one of claims 1 to 8, wherein the time to perform both steps 1) and 2) is 2 hours or less, preferably 1 hour or less, more preferably 45 min or less.

**10.** The process according to any one of claims 1 to 8, wherein the time to perform both steps 1) and 2) is in the range from 1 $\tau_d$ to 100 $\tau_d$, preferably 1 $\tau_d$ to 80 $\tau_d$ and more preferably 1 $\tau_d$ to 50 $\tau_d$, with $\tau_d$ being the reptation disentanglement time of the bulk material of the polymer article.

**11.** A nanoporous polymer material obtainable by the process according to any one of claims 1 to 10.

**12.** A nanoporous polymer material, preferably a nanoporous polymer material with the specification like the bulk material in one or more of claims 3 to 7 and having a porosity $\phi$ of 5 to 60%, preferably a porosity $\phi$ of 5 to 50% and more preferably a porosity $\phi$ of 8 to 45% as measured by gas adsorption (BET) in accordance with DIN 66131 using liquid nitrogen at 77 K.

**13.** The nanoporous polymer material according to claim 11 or 12 comprising a mean pore diameter of 2 to 200 nm, preferably of 2 to 100 nm and/or wherein the pores of the nanoporous polymer material having a diameter of 2 to 20 nm account for 70 % or more of the total pore volume, preferably for 80 % or more and/or wherein the pore diameter distribution of the porous polymer film is such that 50 % of the total pore volume are in a range of 10 nm or less, preferably between 2 nm and 10 nm.

**14.** The nanoporous polymer material according to any one of claims 11 to 13 exhibiting a higher Young modulus and/or a higher shear modulus and/or a higher transversal and longitudinal sound velocity $C_T$ and $C_L$ as measured by BLS and multiplied with the factor (1-$V_p$) with Vp being the pore volume than the bulk material, preferably a higher Young modulus and a higher shear modulus and a higher transversal and longitudinal sound velocity $C_T$ and $C_L$.

15. Membranes, solid supports for sensors and catalysts, diffusion layers, scaffolds, low electric constant materials, photonic band gap materials and optical materials comprising a nanoporous polymer material according to any one of claims 11 to 14.

**Fig 1:**

**Norm. W(log M)[$10^5$]**

**Molar Mass [$10^5$]**

**Fig 2:**

Fig. 3

Fig. 4

Fig. 5

Fig. 6

Fig: 7

EP 4 442 353 A1

**Fig. 8**

**Fig. 9**

**Fig. 10**

**Fig. 11**

19

Fig. 12

Fig. 13

Fig. 14

Fig. 15

Fig. 16

**Fig. 17**

**Fig. 18**

**Fig. 19**

**Fig. 20**

# EUROPEAN SEARCH REPORT

**Application Number**

EP 23 38 6025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RIZZO PAOLA ET AL: "Syndiotactic Polystyrene Films: Orientation and Structural Changes Upon Biaxial Drawing", MACROMOLECULAR CHEMISTRY AND PHYSICS, vol. 212, no. 13, 1 July 2011 (2011-07-01), pages 1419-1426, XP093080060, DE ISSN: 1022-1352, DOI: 10.1002/macp.201100036 * the whole document * | 1-15 | INV. B01D61/14 B01D67/00 B01D69/02 B01D71/28 C08J9/00 |
| X | RIZZO PAOLA ET AL: "Crystalline orientation and molecular transport properties in nanoporous syndiotactic polystyrene films", MACROMOLECULAR SYMPOSIA, vol. 185, no. 1, 1 August 2002 (2002-08-01), pages 65-75, XP093080059, DE ISSN: 1022-1360, DOI: 10.1002/1521-3900(200208)185:1<65::AID-MASY65>3.0.CO;2-9 * the whole document * | 1-15 | |
| A,D | WO 2016/085709 A1 (KIMBERLY CLARK CO [US]) 2 June 2016 (2016-06-02) * the whole document * | 1-15 | TECHNICAL FIELDS SEARCHED (IPC) B01D C08J |
| A | WO 2012/174209 A2 (3M INNOVATIVE PROPERTIES CO [US]; MROZINSKI JAMES S [US] ET AL.) 20 December 2012 (2012-12-20) * the whole document * | 1-15 | |
| A | US 2010/129720 A1 (SAKO KENTARO [JP] ET AL) 27 May 2010 (2010-05-27) * the whole document * | 1-15 | |
| | -/-- | | |

The present search report has been drawn up for all claims

| Place of search | Date of completion of the search | Examiner |
|---|---|---|
| Munich | 8 September 2023 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt
European
Patent Office
Office européen
des brevets

| Application Number |
| --- |
| **EP 23 38 6025** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | US 2007/196638 A1 (WEI XIANGYUN [US] ET AL) 23 August 2007 (2007-08-23) * the whole document * ----- | 1-15 | |

TECHNICAL FIELDS SEARCHED (IPC)

The present search report has been drawn up for all claims

| Place of search | Date of completion of the search | Examiner |
| --- | --- | --- |
| Munich | 8 September 2023 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 6025

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2023

| Patent document cited in search report | | | Publication date | Patent family member(s) | | | Publication date |
|---|---|---|---|---|---|---|---|
| WO 2016085709 | A1 | | 02-06-2016 | AU | 2015353884 | A1 | 08-06-2017 |
| | | | | BR | 112017009046 | A2 | 06-02-2018 |
| | | | | CN | 107107431 | A | 29-08-2017 |
| | | | | EP | 3224033 | A1 | 04-10-2017 |
| | | | | KR | 20170083086 | A | 17-07-2017 |
| | | | | RU | 2017118768 | A | 30-11-2018 |
| | | | | US | 2017305061 | A1 | 26-10-2017 |
| | | | | WO | 2016085709 | A1 | 02-06-2016 |
| WO 2012174209 | A2 | | 20-12-2012 | BR | 112013032169 | A2 | 13-12-2016 |
| | | | | CN | 103608389 | A | 26-02-2014 |
| | | | | EP | 2721097 | A2 | 23-04-2014 |
| | | | | JP | 2014523936 | A | 18-09-2014 |
| | | | | JP | 2017197746 | A | 02-11-2017 |
| | | | | KR | 20140053096 | A | 07-05-2014 |
| | | | | US | 2014094076 | A1 | 03-04-2014 |
| | | | | WO | 2012174209 | A2 | 20-12-2012 |
| US 2010129720 | A1 | | 27-05-2010 | CN | 101535386 | A | 16-09-2009 |
| | | | | JP | 5543715 | B2 | 09-07-2014 |
| | | | | JP | WO2008053898 | A1 | 25-02-2010 |
| | | | | KR | 20090077812 | A | 15-07-2009 |
| | | | | TW | 200844152 | A | 16-11-2008 |
| | | | | US | 2010129720 | A1 | 27-05-2010 |
| | | | | WO | 2008053898 | A1 | 08-05-2008 |
| US 2007196638 | A1 | | 23-08-2007 | AU | 2007217288 | A1 | 30-08-2007 |
| | | | | BR | PI0707988 | A2 | 17-05-2011 |
| | | | | CA | 2637623 | A1 | 30-08-2007 |
| | | | | CN | 104015348 | A | 03-09-2014 |
| | | | | EP | 1993811 | A2 | 26-11-2008 |
| | | | | EP | 2974847 | A1 | 20-01-2016 |
| | | | | EP | 3663072 | A1 | 10-06-2020 |
| | | | | HU | E050789 | T2 | 28-01-2021 |
| | | | | HU | E056772 | T2 | 28-03-2022 |
| | | | | JP | 5461018 | B2 | 02-04-2014 |
| | | | | JP | 6399993 | B2 | 03-10-2018 |
| | | | | JP | 6542290 | B2 | 10-07-2019 |
| | | | | JP | 2009527633 | A | 30-07-2009 |
| | | | | JP | 2012188675 | A | 04-10-2012 |
| | | | | JP | 2016106163 | A | 16-06-2016 |
| | | | | JP | 2017214581 | A | 07-12-2017 |
| | | | | KR | 20080085922 | A | 24-09-2008 |
| | | | | KR | 20100101679 | A | 17-09-2010 |
| | | | | KR | 20120094152 | A | 23-08-2012 |
| | | | | PL | 2974847 | T3 | 02-11-2020 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 38 6025

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2023

| Patent document cited in search report | Publication date | Patent family member(s) | | Publication date |
|---|---|---|---|---|
| | | PL | 3663072 T3 | 21-02-2022 |
| | | TW | I358422 B | 21-02-2012 |
| | | US | 2007196638 A1 | 23-08-2007 |
| | | US | 2014287322 A1 | 25-09-2014 |
| | | US | 2014302374 A1 | 09-10-2014 |
| | | US | 2021162706 A1 | 03-06-2021 |
| | | WO | 2007098339 A2 | 30-08-2007 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130157035 A1
- WO 2016085709 A1
- US 20220362720 A1
- US 20220362984 A1

### Non-patent literature cited in the description

- **ABETZ, V. ; KREMER, K. ; MUELLER, M. ; REITER, G.** Functional macromolecular systems: Kinetic pathways to obtain tailored structures. *Macromol. Chem. Phys.,* 2019, vol. 220, 8
- **ARIGA, K. ; NISHIKAWA, M. ; MORI, T. ; TAKEYA, J. ; SHRESTHA, L.K. ; HILL, J.P.** Self-assembly as a key player for materials nanoarchitectonics. *Science and Technology of Advanced Materials,* 2019, vol. 20, 51-95
- **BATES, F.S. ; FREDRICKSON, G.H.** Block copolymers-designer soft materials. *Phys. Today,* 1999, vol. 52, 32-38
- **SANKHALA, K. ; KOLL, J. ; ABETZ, V.** Facilitated structure formation in isoporous block copolymer membranes upon controlled evaporation by gas flow. *Membranes,* 2020, vol. 10, 83
- **BANG, J. ; KIM, S.H. ; DROCKENMULLER, E. ; MISNER, M.J. ; RUSSELL, T.P. ; HAWKER, C.J.** Defect-free nanoporous thin films from abc triblock copolymers. *J. Am. Chem. Soc.,* 2006, vol. 128, 7622-7629
- Nanoporous materials from block copolymer precursors. **HILLMYER, M.A.** Block Copolymers II. Advances in Polymer Science. Springer, vol. 190, 137-181
- **BOLTON, J. ; BAILEY, T.S. ; RZAYEV, J.** Large Pore Size Nanoporous Materials from the Self-Assembly of Asymmetric Bottlebrush Block Copolymers. *Nano. Lett.,* 2011, 998-1001
- **BATYS, P. ; FEDOROV, D. ; MOHAMMADI, P. ; LEMETTI, L. ; LINDER, M.B. ; SAMMALKORPI, M.** Self-assembly of silk-like protein into nanoscale bicontinuous networks under phase-separation conditions. *Biomacromolecules,* 2021, vol. 22, 690-700
- **LIU, J. ; HUANG, R. ; LI, G. ; KAPLAN, D.L. ; ZHENG, Z. ; WANG, X.** Generation of nano-pores in silk fibroin films using silk nanoparticles for full-thickness wound healing. *Biomacromolecules,* 2021, vol. 22 (2), 546-556
- **ESCAL'E, P. ; RUBATAT, L. ; BILLON, L. ; SAVE, M.** Recent advances in honeycomb-structured porous polymer films prepared via breath figures. *Springer Nature 2021 LATEX template 20 Nanoporous free standing polymer films Eur. Polym. J.,* 2012, vol. 48 (6), 1001-1025
- **MENG, F. ; DOI, M. ; OUYANG, Z.** Cavitation in drying droplets of soft matter solutions. *Phys. Rev. Lett.,* 2014, vol. 113
- **DEBENEDICTIS, E.P. ; ZHANG, Y. ; KETEN, S.** Structure and mechanics of bundled semiflexible polymer networks. *Macromolecules,* 2020, vol. 53, 6123-6134
- **GU, Y. ; ZHAO, J. ; JOHNSON, J.A.** Polymer networks: From plastics and gels to porous frameworks. *Angew. Chem. Int. Ed.,* 2020, vol. 59, 5022-5049
- Chain Dimensions and Entanglement Spacings. **L. J. FETTERS ; D.J. LOHSE ; R.H. COLBY.** Physical Properties of Polymers. Springer Science and Business Media LLC, 2007, 447
- **FERRY, J. D.** Viscoelastic Properties of Polymers. Wiley, 1980
- **YU CANG ; JIAQI LIU ; MEGUYA RYU ; BARTLOMIEJ GRACZYKOWSKI ; JUNKO MORIKAWA ; SHU YANG ; GEORGE FYTAS.** On the origin of elasticity and heat conduction anisotropy of liquid crystal elastomers at gigahertz frequencies. *Nat. Comm,* 2022, vol. 13, 5248
- **PENCIU, RS ; KRIEGS, H ; PETEKIDIS, G ; FYTAS, G; ECONOMOU.** Phonons in colloidal systems. *J. Chem. Phys.,* 2003, vol. 118, 5224
- **F.KARGAR ; A.A.BALANDIN.** *Nat.Photonics,* 2021, vol. 15, 720-731
- **KARGAR, F. ; BALANDIN, A.A.** Brillouin-mandelstam light-scattering spectroscopy. *Nat. Photon.,* vol. 15, 720-731
- **J.D. FERRY.** Viscoleastic properties of polymers. Wiley, 1980
- **W.W. GREASSLEY.** Polymeric Liquids & Networks: Dynamics and Rheology. Taylor & Francis, 2008

- **BRUNAUER, S. ; EMMETT, P.H. ; TELLER, E.** Adsorption of gases in multimolecular layers. *Journal of the American Chemical Society,* 1938, vol. 60 (2), 309-319